# EUROPÄISCHE PATENTANMELDUNG

(11) **EP 2 642 652 A1**
(43) Veröffentlichungstag der Anmeldung: **25.09.2013**
(21) Anmeldenummer: 12160087.8
(22) Anmeldetag: 19.03.2012
(51) Int. Cl.: H02M 5/458, H02M 5/297, H02J 7/34

(54) **Spannungszwischenkreisumrichter mit schlankem Zwischenkreis (F3E) mit zusätzlichem geregeltem Pufferzwischenkreis und Verfahren zu dessen Betrieb**

(71) Anmelder: Siemens Aktiengesellschaft, 80333 München (DE)
(72) Erfinder: Baumann, Falko, 91242 Ottensoos (DE); Kneuer, Christian, 90766 Fürth (DE)

(57) **Zusammenfassung**

Die Erfindung betrifft einen Spannungszwischenkreisumrichter mit einem netzseitigen Stromrichter (10), einem schlanken Zwischenkreis (14) mit zumindest einem Zwischenkreiskondensator (16), einem lastseitigen Stromrichter (12) sowie einem Pufferzwischenkreis (24) mit zumindest einem Pufferzwischenkreiskondensator (22), bei dem der mindestens eine Pufferzwischenkreiskondensator (22) bidirektional an den Zwischenkreis (14) angeschlossen ist, sowie ein Verfahren zum Betrieb eines solchen Spannungszwischenkreisumrichters.

## Beschreibung

Die Erfindung betrifft einen im Folgenden kurz als Zwischenkreisumrichter bezeichneten Spannungszwischenkreisumrichter mit einem sogenannten schlanken Zwischenkreis, also einem eher klein bemessenen Energiespeicher im Zwischenkreis. Solche Zwischenkreisumrichter sind demgemäß darauf angewiesen, dass Energie, die dem Zwischenkreis entnommen wird, augenblicklich vom Versorgungsnetz nachgeliefert wird. Bei einem rückspeisefähigen Zwischenkreisumrichter ist darüber hinaus erforderlich, dass Energie, die dem Zwischenkreis zugeführt wird, augenblicklich rückgespeist wird. Die Erfindung betrifft im Weiteren auch ein Verfahren zum Betrieb eines solchen Spannungszwischenkreisumrichters mit schlankem Zwischenkreis.

Aus der DE 103 38 476 A ist ein Spannungszwischenkreisumrichter mit schlankem Zwischenkreis bekannt. Die Bezeichnung eines Zwischenkreises mit einem klein bemessenen Energiespeicher als schlanker Zwischenkreis ist in der Fachterminologie gebräuchlich. Der Zwischenkreisumrichter der DE 103 38 476 A ist in FIG 1 gezeigt.

Aus der WO 2007/003544 ist ein Frequenzumrichter mit einem kondensatorlosen Spannungszwischenkreis und einem Pufferzwischenkreis bekannt, wobei ein Pufferzwischenkreiskondensator mit einer mit einem Schaltelement überbrückbaren Entkopplungsdiode an den Spannungszwischenkreis angeschlossen ist. Der Pufferzwischenkreiskondensator kann damit im ansonsten kondensatorlosen Spannungszwischenkreis als Energiespeicher fungieren. In der WO 2007/003544 ist ausdrücklich darauf hingewiesen, dass ein auf einer Gleichspannungsseite des vom Frequenzumrichter umfassten, selbstgeführten Pulsstromrichters vorgesehener Folien- oder Keramikkondensator nur verwendet wird, um eine Kommutierung von abschaltbaren Leistungshalbleitern des Pulsstromrichters zu erleichtern und nicht dazu geeignet ist, im Spannungszwischenkreis Energie zu speichern, so dass sich die Bezeichnung des Spannungszwischenkreises als kondensatorloser Spannungszwischenkreis rechtfertigt.

Um die eingangs erwähnte, notwendige schnelle Reaktion zu gewährleisten, muss das Versorgungsnetz einen geringen Innenwiderstand, also eine geringe Impedanz, haben. Dies ist allerdings nicht in jedem Fall gegeben und viele Anwender kennen die jeweilige Impedanz am Anschlusspunkt nicht und müssen sie im Übrigen, selbst wenn sie bekannt sein sollte, als gegeben hinnehmen.

Heute ist ein stabiler Betrieb von Geräten mit schlanken Zwischenkreisen nur bei geringen Netzimpedanzen möglich. Zudem können die geringen Kapazitäten der Zwischenkreiskondensatoren bei solchen schlanken Zwischenkreisen mit höheren Induktivitäten des Versorgungsnetzes (Netzinduktivitäten) Resonanzfrequenzen anregen. Deshalb wird bei heutigen Zwischenkreisumrichtern mit schlankem Zwischenkreis üblicherweise gefordert, dass die Kurzschlussspannung der Netzversorgung u_{K} <= 1% bezogen auf die Umrichterbemessungsleistung ist - im Folgenden kurz als geringe Netzimpedanz oder als Netzimpedanz kleiner als 1% bezeichnet.

Eine Aufgabe der vorliegenden Erfindung besteht entsprechend darin, einen Spannungszwischenkreisumrichter mit schlankem Zwischenkreis sowie eine Schaltung für einen solchen Spannungszwischenkreisumrichter anzugeben, der bzw. die auch bei größeren Netzimpedanzen, insbesondere sowohl bei geringen Netzimpedanzen (bis etwa 1%) wie auch bei größeren Netzimpedanzen (oberhalb von etwa 1%), verwendbar ist bzw. sind.

Diese Aufgabe wird erfindungsgemäß mit einem Spannungszwischenkreisumrichter mit den Merkmalen des Anspruchs 1 gelöst. Dazu ist bei einem Spannungszwischenkreisumrichter mit einem netzseitigen Stromrichter, einem schlanken Zwischenkreis mit zumindest einem Zwischenkreiskondensator als Energiespeicher, einem lastseitigen Stromrichter sowie einem Pufferzwischenkreis mit zumindest einem Pufferzwischenkreiskondensator als weiterem Energiespeicher vorgesehen, dass der mindestens eine Pufferzwischenkreiskondensator schaltbar bidirektional an den Zwischenkreis angeschlossen ist.

Der Vorteil der Erfindung besteht darin, dass ein bei vielen Geräten mit schlankem Zwischenkreis (vgl. zum Beispiel den Spannungszwischenkreisumrichter aus der DE 103 38 476 A) ohnehin vorhandener Pufferzwischenkreis aufgrund des jetzt schaltbar bidirektionalen Anschlusses nicht nur als Spannungsquelle oder zur Aufnahme transienter Überspannungen oder als Energiepuffer fungiert, sondern dass die im Pufferzwischenkreis gespeicherte Energie auch zur Stabilisierung der Zwischenkreisspannung verwendbar ist.

Bei bekannten Spannungszwischenkreisumrichtern mit schlankem Zwischenkreis ist der Pufferzwischenkreis über eine Entkopplungsdiode vom Hauptzwischenkreis entkoppelt. Der Energiefluss ist damit nur in eine Richtung (unidirektional) möglich, nämlich zum Laden eines oder mehrerer Pufferzwischenkreiskondensatoren. Nur so ist gewährleistet, dass im Normalbetrieb, unabhängig von der Netzimpedanz, ein blockförmiger Strom aufgenommen wird und eine Netzdrossel entbehrlich ist. Es kann also nur Energie aufgenommen werden, es kann aber bisher nicht die im Pufferzwischenkreis gespeicherte Energie in den Hauptzwischenkreis eingespeist werden, wie dies jetzt mit der schaltbar bidirektionalen Anschaltung des oder jedes Pufferzwischenkreiskondensators an den Zwischenkreis möglich ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin und sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Zwischenkreisumrichters ist vorgesehen, dass zum schaltbar bidirektionalen Anschluss des mindestens einen Pufferzwischenkreiskondensators an den Zwischenkreis als Pufferzwischenkreis zumindest eine Serienschaltung aus einer Entkopplungsdiode und dem Pufferzwischenkreiskondensator mit einem parallel zur Entkopplungsdiode angeschlossenen Schaltelement fungiert. Das Schaltelement erlaubt die beeinflussbare bidirektionale Anschaltung des oder jedes Pufferzwischenkreiskondensators an den Zwischenkreis. Im Falle einer solchen Anschaltung kann sich der oder jeder Pufferzwischenkreiskondensator in den Zwischenkreis entladen und damit eine Stabilisierung einer im Zwischenkreis abgreifbaren Zwischenkreisspannung bewirken.

Als Schaltelement kommt ein elektrisch ansteuerbares Schaltelement, also zum Beispiel ein Transistor oder ein MOSFET, in Betracht, das mit einer Ansteuerschaltung ansteuerbar ist.

Bei einer besonderen Ausführungsform ist vorgesehen, dass das Schaltelement mittels der Ansteuerschaltung mit einem pulsweitenmodulierten Signal ansteuerbar ist. Ein pulsweitenmoduliertes Signal erlaubt eine spezifische Vorgabe von Schaltzeitpunkten und einer sich jeweils im Anschluss ergebenden und durch eine Breite der jeweiligen Pulse festgelegte Aktivierungsdauer des Schaltelements. Damit kann der Energieabfluss aus dem Pufferzwischenkreis in den Hauptzwischenkreis genau gesteuert werden.

Ein Umfang einer etwaig notwendigen Stabilisierung einer Zwischenkreisspannung mit in dem Pufferzwischenkreis gespeicherter elektrischer Energie hängt maßgeblich von einer Impedanz eines jeweiligen Versorgungsnetzes oder einer Impedanz des jeweiligen Versorgungsnetzes und einem Verhältnis einer momentanen Zwischenkreisspannung zum unteren Grenzwert für die Zwischenkreisspannung (Zwischenkreisspannungsgrenzwert) ab. Durch eine Erfassung der Zwischenkreisspannung als Ausgang eines netzseitigen Stromrichters, dem am Eingang die Versorgungsspannung zugeführt wird, lässt sich ein Maß für die Netzimpedanz ermitteln und ggf. gleichzeitig ermitteln, ob der Zwischenkreisspannungsgrenzwert erreicht oder unterschritten ist. Daher ist bei einer Ausführungsform des Zwischenkreisumrichters vorgesehen, dass die im Zwischenkreis abgreifbare Zwischenkreisspannung oder die im Zwischenkreis abgreifbare Zwischenkreisspannung und der Zwischenkreisspannungsgrenzwert als Eingangssignal für die Ansteuerschaltung zur Generierung eines Ansteuersignals fungiert bzw. fungieren. Das Ansteuersignal, insbesondere das pulsweitenmodulierte Ansteuersignal, wird dann in Abhängigkeit von der Zwischenkreisspannung oder der Zwischenkreisspannung und dem Zwischenkreisspannungsgrenzwert generiert.

Wenn bei einer Ausführungsform des Zwischenkreisumrichters in Reihe mit dem Schaltelement eine Tiefsetzstellerdrossel und diese Serienschaltung insgesamt parallel zu der Entkopplungsdiode angeschlossen ist, wobei parallel zur der Serienschaltung aus Pufferzwischenkreiskondensator und Schaltelement eine Freilaufdiode angeschlossen ist, ergibt sich ein insgesamt um einen Tiefsetzsteller ergänzter Pufferzwischenkreis.

Die eingangs genannte Aufgabe wird auch mit einem Verfahren zum Betrieb eines Spannungszwischenkreisumrichters wie hier und nachfolgend beschrieben gelöst, indem das Schaltelement in Abhängigkeit von einer jeweils wirksamen Netzimpedanz, insbesondere einer als Maß für wirksame Netzimpedanz erfassten Zwischenkreisspannung über dem Zwischenkreiskondensator, oder der Zwischenkreisspannung und dem Zwischenkreisspannungsgrenzwert angesteuert wird.

Bei einer Ausführungsform des Verfahrens ist vorgesehen, dass das Schaltelement mittels einer Ansteuerschaltung angesteuert wird, die in Abhängigkeit von der wirksamen Netzimpedanz, zum Beispiel in Abhängigkeit von der Zwischenkreisspannung oder der Zwischenkreisspannung und dem Zwischenkreisspannungsgrenzwert, ein pulsweitenmoduliertes Ansteuersignal erzeugt.

Zur Realisierung der Ansteuerschaltung kommt besonders deren Implementation in Form eines anwenderspezifischen integrierten Schaltkreises (ASIC) oder dergleichen in Betracht. Die Ansteuerschaltung umfasst dabei Mittel zur Umsetzung des jeweils erfassten Maßes für die Netzimpedanz, nämlich zum Beispiel der Zwischenkreisspannung, oder der Zwischenkreisspannung und des Zwischenkreisspannungsgrenzwerts in ein zur Ansteuerung des Schaltelements verwendbares Ansteuersignal, mit dem die Entladung des oder jedes Pufferzwischenkreiskondensators so gesteuert wird, dass die Zwischenkreisspannung nötigenfalls geeignet stabilisiert wird. Als ein derartiges Mittel kommt ein von der Ansteuerschaltung umfasster Pulsweitenmodulator (PWM) in Betracht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: einen bekannten Spannungszwischenkreisumrichter mit einem schlankem Zwischenkreis,
- FIG 2: eine Ausführungsform eines Spannungszwischenkreisumrichters gemäß der Erfindung.

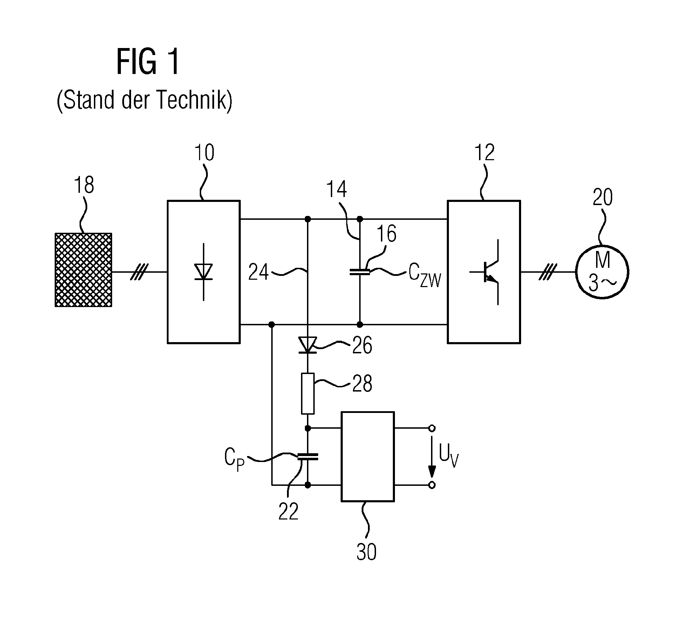

Spannungszwischenkreisumrichter mit sogenanntem schlanken Zwischenkreis sind bekannt. Insoweit zeigt FIG 1 ein Blockschaltbild eines solchen Spannungszwischenkreisumrichters. Dieser weist in an sich bekannter Art und Weise einen ersten, netzseitigen Stromrichter 10 und einen zweiten, lastseitigen Stromrichter 12 auf, die gleichspannungsseitig mittels eines schlanken Zwischenkreises 14 miteinander elektrisch leitend verbunden sind. Als netzseitiger Stromrichter 10 ist üblicherweise ein Diodengleichrichter vorgesehen, wogegen der lastseitige Stromrichter 12 üblicherweise ein ansonsten häufig auch als Wechselrichter (WR) bezeichneter, selbstgeführter Pulswechselrichter mit Halbleiterschaltern, häufig sogenannten IGBTs, ist. Der schlanke Zwischenkreis 14 weist einen Zwischenkreiskondensator 16 (C_{ZW}) auf. An den Netzeingängen des ersten Stromrichters 10 ist ein speisendes Netz 18 angeschlossen. An den Ausgangs-Anschlüssen des zweiten Stromrichters 12 ist ein Drehstrommotor 20 angeschlossen.

Ein Pufferzwischenkreiskondensator 22 (C_{P}) ist in einem Pufferzwischenkreis 24 elektrisch parallel zum Zwischenkreiskondensator 16 geschaltet, wobei in einer Zuleitung des Pufferzwischenkreiskondensators 22 eine Reihenschaltung aus einer Entkopplungsdiode 26 und einem als Strombegrenzung fungierenden Widerstand 28 geschaltet ist. Durch die Entkopplungsdiode 22 sind der Zwischenkreiskondensator 16 und der Pufferzwischenkreiskondensator 22 voneinander entkoppelt.

Tritt im speisenden Netz 18 eine Netzunterbrechung auf, so werden der Zwischenkreiskondensator 16 und der Pufferzwischenkreiskondensator 22 nicht mehr mit Energie versorgt. Da der Pufferzwischenkreiskondensator 22 vom Zwischenkreiskondensator 16 entkoppelt ist, kann dieser nicht von der Umrichterlast entladen und somit die dort gespeicherte Energie mittels einer Stromversorgungseinrichtung 30 zur Aufrechterhaltung der Stromversorgung der Elektronik des lastseitigen Stromrichters 12, also des Wechselrichters, verwendet werden. Dadurch bleibt der Spannungszwischenkreisumrichter in Betrieb, so dass dieser bei Netzwiederkehr wieder auf seinen Nennbetriebspunkt hochgefahren werden kann.

Da der Zwischenkreiskondensator 16 einen geringen Kapazitätswert aufweist, ist die Höhe des Nachladestromes derart minimal, dass die Dioden im netzseitigen Stromrichter 10 (Diodengleichrichter) nicht mehr überdimensioniert werden müssen.

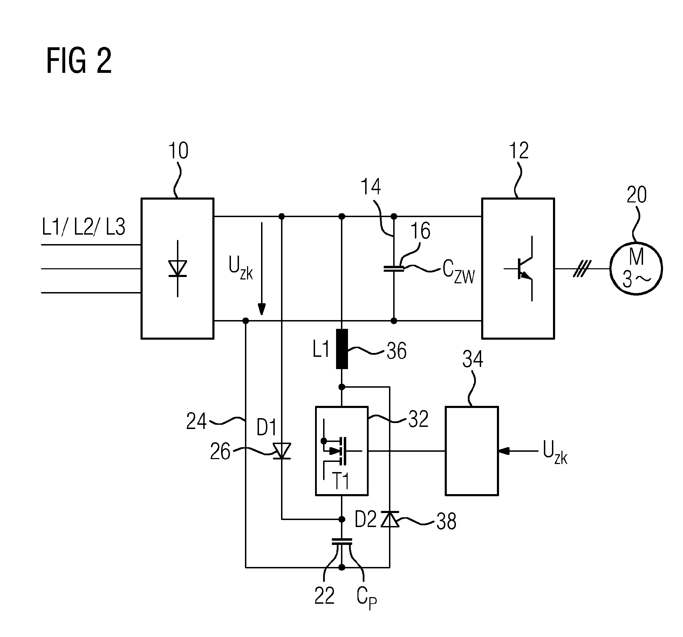

FIG 2 zeigt eine Ausführungsform eines Spannungszwischenkreisumrichters gemäß der Erfindung. Dort ist der Pufferzwischenkreis 24 schaltbar bidirektional angeschlossen. Dazu ist parallel zu der Entkopplungsdiode 26 (D1), die eine unidirektionale Anschaltung darstellt, ein Schaltelement 32 (T1) eingefügt, das bei entsprechender Ansteuerung eine im Vergleich zur Situation gemäß FIG 1 antiparallele Stromrichtung freigibt und so die im Pufferzwischenkreis 24, nämlich im Pufferzwischenkreiskondensator 22 (C_{P}), gespeicherte Energie für den als Hauptzwischenkreis fungierenden Zwischenkreis 14 nutzbar macht.

Das Schaltelement 32 wird mit einer Ansteuerschaltung 34 angesteuert, zum Beispiel mit einem pulsweitenmodulierten Ansteuersignal. Dazu umfasst die Ansteuerschaltung 34 einen geeigneten Signalgenerator, zum Beispiel einen Pulsweitenmodular (PWM). Dafür wird der Ansteuerschaltung 34 ein Messwert der Zwischenkreisspannung U_{zk} zugeführt. Der Messwert der Zwischenkreisspannung U_{zk} fungiert als Maß für die Netzimpedanz, so dass die Ansteuerung des Schaltelements 32 durch die Ansteuerschaltung 34 in Abhängigkeit von der Netzimpedanz erfolgen kann. Eventuell kann für die Ansteuerung des Schaltelements 32 durch die Ansteuerschaltung 34 auch ein Momentanwert der Zwischenkreisspannung U_{zk} in Relation zu einem vorgegeben oder vorgebbaren Zwischenkreisspannungsgrenzwert berücksichtigt werden. Dann kann die Ansteuerung des Schaltelements 32 durch die Ansteuerschaltung 34 auch erfolgen, wenn die Zwischenkreisspannung U_{zk} unter eine mit dem Zwischenkreisspannungsgrenzwert vorgegebene Schwelle fällt, so dass das Unterschreiten dieser Schwelle nach Möglichkeit durch Einspeisung von in dem mindestens einen Pufferzwischenkreiskondensator 22 gespeicherter elektrischer Energie in den Zwischenkreis 14 und den dortigen mindestens einen Zwischenkreiskondensator 16 vermieden wird.

Der Pufferzwischenkreis 24 wird mit einer Tiefsetzstellerdrossel 36 und einer Freilaufdiode 38 zu einem Tiefsetzsteller ergänzt, wodurch ein äußerst verlustarmer Energieaustausch zwischen dem Pufferzwischenkreis 24 und dem Hauptzwischenkreis, nämlich dem schlanken Zwischenkreis 14, realisiert wird.

Der Spannungszwischenkreisumrichter kann nun in verschiedenen Szenarien sinnvoll zum Einsatz kommen:
Bei einer geringen Impedanz des Versorgungsnetzes kann die im Zwischenkreis 14 gespeicherte Energie augenblicklich mit dem Versorgungsnetz ausgetauscht werden und es liegen keine Resonanzzustände vor. Die Ansteuerschaltung 34 bleibt im Normalbetrieb inaktiv. Situationsbedingt kommt es normalerweise zu keiner Unterschreitung einer kritischen Zwischenkreisspannung U_{zk}, also zu keiner Unterschreitung eines Zwischenkreisspannungsgrenzwerts.
Bei einer hohen Impedanz des Versorgungsnetzes, wenn also die im Zwischenkreis 14 gespeicherte Energie nicht augenblicklich mit dem Versorgungsnetz ausgetauscht werden kann, ergeben sich eventuell Resonanzzustände, speziell bei einem als sogenannter F³E-Umrichter ausgeführten netzseitigen Stromrichter 10. Mittels der Ansteuerschaltung 34 und einem von dieser geeignet generierten Ansteuersignal, nämlich insbesondere einem pulsweitenmodulierten Ansteuersignal, kann dem Zwischenkreis 14 dosiert Energie vom Pufferzwischenkreis 24, nämlich vom Pufferzwischenkreiskondensator 22, zugeführt werden.

Bei Netzausfällen oder starken Schwingungen kann es zu einem starken Spannungseinbruch im Zwischenkreis 14, also zu einem starken Einbruch der über dem Zwischenkreiskondensator 16 liegenden Zwischenkreisspannung U_{zk}, kommen. Dann wird die Tiefsetzstellerdrossel 36 bewusst durch ein Ansteuersignal, das eine dauerhafte Aktivierung oder nahezu dauerhafte Aktivierung des Schaltelements 32 bewirkt, in Sättigung getrieben. Für die Entladung des Pufferzwischenkreiskondensators 22 in den Zwischenkreis 14 fällt diese dann nicht mehr ins Gewicht und der Pufferzwischenkreis 24 stellt sich insgesamt wie eine Parallelschaltung eines Kondensators, nämlich des Pufferzwischenkreiskondensators 22, zum Zwischenkreiskondensator 16 dar. Dadurch wird der Zwischenkreis 14 und die Zwischenkreisspannung U_{zk} schnellstmöglich stabilisiert. Dabei muss die Tiefsetzstellerdrossel 36 nicht für den Umrichterstrom ausgelegt sein, so dass eine kompakte Ausführung möglich ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Wenn der Zwischenkreis 14 mit dem Zwischenkreiskondensator 16 als Hauptzwischenkreis aufgefasst wird, kann der Pufferzwischenkreis 24 als Hilfszwischenkreis bezeichnet und verstanden werden. Durch das modulierte Schalten des Hilfszwischenkreises auf den Hauptzwischenkreis leidet zwar geringfügig der ansonsten nach der Gleichrichtung im Wesentlichen blockförmige Netzstrom, allerdings ergibt sich vorteilhaft ein stabiler Betrieb an allen Versorgungsnetzen, unabhängig von einer dortigen hohen oder niedrigen Impedanz. Im Extremfall, wenn also das Schaltelement 32 dauerhaft aktiviert und die Entkopplungsdiode 26 damit quasi kurzgeschlossen ist, verhält sich der Spannungszwischenkreisumrichter mit schlankem Zwischenkreis wie ein konventioneller Umrichter, der allerdings durch die hohe Netzimpedanz nur geringe Oberschwingungsströme erzeugt.

Um eine ähnlich hohe Performanz wie bei konventionellen Umrichtern mit sogenannten B6-Eingangsgleichrichtern zu erhalten, muss die Kapazität des Pufferzwischenkreiskondensators 22 ähnlich groß wie die Kapazität dortiger Glättungskondensatoren sein. Die Ausführung kann aber trotzdem mit hochkapazitiven Kondensatoren mit nur geringer Ripplestrombelastbarkeit erfolgen, da diese nur bei hohen Netzimpedanzen mit Ripplestrom beaufschlagt werden. Bei hohen Netzimpedanzen sind die Rippleströme allerdings bereits deutlich bedämpft, nämlich gerade aufgrund der hohen Impedanzen, so dass die Ausführung des Spannungszwischenkreisumrichters kostengünstig und energieeffizient ist.

Einzelne im Vordergrund stehende Aspekte der hier eingereichten Beschreibung lassen sich damit kurz wie folgt zusammenfassen:
Angegeben werden ein Spannungszwischenkreisumrichter mit einem netzseitigen Stromrichter 10, einem schlanken Zwischenkreis 14 mit zumindest einem Zwischenkreiskondensator 16 als Energiespeicher, einem lastseitigen Stromrichter 12 sowie einem Pufferzwischenkreis 24 mit zumindest einem Pufferzwischenkreiskondensator 22 als weiterem Energiespeicher, bei dem zur Speisung und damit bewirkbaren Stabilisierung einer Zwischenkreisspannung U_{zk} der mindestens eine Pufferzwischenkreiskondensator 22 schaltbar bidirektional an den Zwischenkreis 14 angeschlossen ist, sowie ein Verfahren zum Betrieb eines solchen Spannungszwischenkreisumrichters, bei dem die Speisung der Zwischenkreisspannung U_{zk} aus dem mindestens einen Pufferzwischenkreiskondensator 22 zum Beispiel in Abhängigkeit von einer jeweils ermittelten Netzimpedanz oder einem Maß für die Netzimpedanz oder einer Zwischenkreisspannung U_{zk} als Maß für die Netzimpedanz und einem Zwischenkreisspannungsgrenzwert erfolgt.

## Patentansprüche

1. Spannungszwischenkreisumrichter mit einem netzseitigen Stromrichter (10), einem schlanken Zwischenkreis (16) mit zumindest einem Zwischenkreiskondensator (14) als Energiespeicher, einem lastseitigen Stromrichter (12) sowie einem Pufferzwischenkreis (24) mit zumindest einem Pufferzwischenkreiskondensator (22) als weiterem Energiespeicher, **dadurch gekennzeichnet, dass** der mindestens eine Pufferzwischenkreiskondensator (22) schaltbar bidirektional an den Zwischenkreis (14) angeschlossen ist.

2. Spannungszwischenkreisumrichter nach Anspruch 1, wobei zum schaltbar bidirektionalen Anschluss des mindestens einen Pufferzwischenkreiskondensators (22) an den Zwischenkreis (14) als Pufferzwischenkreis (24) zumindest eine Serienschaltung aus einer Entkopplungsdiode (26) und dem Pufferzwischenkreiskondensator (22) mit einem parallel zur Entkopplungsdiode (26) angeschlossenen Schaltelement (32) fungiert.

3. Spannungszwischenkreisumrichter nach Anspruch 2, wobei das Schaltelement (32) ein elektrisch ansteuerbares Schaltelement (32) ist und mit einer Ansteuerschaltung (34) ansteuerbar ist.

4. Spannungszwischenkreisumrichter nach Anspruch 3, wobei das Schaltelement (32) mittels der Ansteuerschaltung (34) mit einem pulsweitenmodulierten Signal ansteuerbar ist.

5. Spannungszwischenkreisumrichter nach einem der Ansprüche 3 oder 4, wobei eine im Zwischenkreis (14) abgreifbare Zwischenkreisspannung (U_{zk}) als Eingangssignal für die Ansteuerschaltung (34) zur Generierung eines Ansteuersignals in Abhängigkeit von der Zwischenkreisspannung (U_{zk}) fungiert.

6. Spannungszwischenkreisumrichter nach einem der Ansprüche 2 bis 5, wobei in Reihe mit dem Schaltelement (32) eine Tiefsetzstellerdrossel (36) und diese Serienschaltung insgesamt parallel zu der Entkopplungsdiode (26) angeschlossen ist und wobei parallel zur der Serienschaltung aus Pufferzwischenkreiskondensator (22) und Schaltelement (32) eine Freilaufdiode (38) angeschlossen ist.

7. Verfahren zum Betrieb eines Spannungszwischenkreisumrichters nach einem der Ansprüche 2 bis 6, wobei das Schaltelement (32) in Abhängigkeit von einer Zwischenkreisspannung (U_{zk}) über dem Zwischenkreiskondensator (16) angesteuert wird.

8. Verfahren nach Anspruch 7, wobei das Schaltelement (32) mittels einer Ansteuerschaltung( 34), die in Abhängigkeit von der Zwischenkreisspannung (U_{zk}) ein pulsweitenmoduliertes Ansteuersignal erzeugt, angesteuert wird.
